# EUROPÄISCHE PATENTANMELDUNG

(11) **EP 4 075 210 A1**
(43) Veröffentlichungstag der Anmeldung: **19.10.2022**
(21) Anmeldenummer: 21168330.5
(22) Anmeldetag: 14.04.2021
(51) Int. Cl.: G05B 13/04, G06N 3/12

(54) **OPTIMIERUNGSVERFAHREN FÜR EINE STEUEREINHEIT, STEUERUNGSMITTEL, AUTOMATISIERTE ANLAGE UND COMPUTERPROGRAMMPRODUKT**

(71) Anmelder: Siemens Aktiengesellschaft, 80333 München (DE)
(72) Erfinder: Hein, Daniel, 81549 München (DE); Labisch, Daniel, 76149 Karlsruhe (DE)

(57) **Zusammenfassung**

Die Erfindung betrifft ein Optimierungsverfahren (100) für eine Steuereinheit (40) einer automatisierten Anlage (10), die ein Steuerungsmittel (40) aufweist, dessen Funktionsablauf in funktionell verknüpfte Elementarfunktionsblöcke (42) auflösbar ist, umfassend die Schritte:
a) Bereitstellen eines Basis-Steuerungsmittels (35) in Form eines Datenabbilds (41) mit dessen Elementarfunktionsblöcken (42);
b) Zufallsunterstütztes Erzeugen einer Mehrzahl an Kandidaten-Steuerungsmitteln (50) aus dem Datenabbild (41) des Basis-Steuerungsmittels (35) durch jeweiliges Ersetzen zumindest eines Elementarfunktionsblocks (42) durch zumindest einen abweichenden Elementarfunktionsblock (46);
c) Auswählen zumindest eines Kandidaten-Steuerungsmittels (50) basierend auf zumindest einem einstellbaren Zielparameter (52);
d) Ersetzen des Basis-Steuerungsmittels (35) durch das in Schritt c) ausgewählte Kandidaten-Steuerungsmittel (50).
Erfindungsgemäß ist vorgesehen, dass im Schritt b) der zumindest eine abweichende Elementarfunktionsblock (46) zu den mit ihm funktionell verknüpften Elementarfunktionsblöcken (42) zu einer Beschleunigung des Optimierungsverfahren (100) semantisch verträglich ausgebildet ist.

## Beschreibung

Die Erfindung betrifft ein Optimierungsverfahren für eine Steuereinheit einer automatisierten Anlage und ein Steuerungsmittel, das über ein solches Optimierungsverfahren herstellbar ist. Die Erfindung betrifft auch eine Steuereinheit, die über ein korrespondierendes Steuerungsmittel verfügt und eine automatisierte Anlage, die mit einer Steuereinheit ausgestattet ist, die über ein entsprechendes Steuerungsmittel verfügt. Ebenso betrifft die Erfindung ein Computerprogrammprodukt, das zu einem Durchführen des Optimierungsverfahrens ausgebildet ist.

Die Patentanmeldung US 2003/0050902 A1 offenbart einen genetischen Optimierungsalgorithmus für ein Sensornetzwerk. Der Optimierungsalgorithmus dient dazu, einen Sensor im Sensornetzwerk zu bestimmen, mit dem ein bestimmtes Ziel zu überwachen ist.

Aus US 2006/0047794 A1 ist ein genetischer Algorithmus bekannt, der zur Optimierung eines laufenden Computersystems eingesetzt wird. Dazu werden Konfigurationsparameter für einzelne Computerkomponenten ermittelt und erprobt. Generationsweise werden einzelne Konfigurationsparameter modifiziert und erneut erprobt. Zu den durch die Optimierung verfolgbaren Zielen gehören beispielsweise die Sicherheit des Computersystems oder dessen Skalierbarkeit.

Der Artikel "Evolutionary algorithms and their applications to engineering problems" von Adam Slowik und Halina Kwasnicka in Neural Computing and Applications, veröffentlicht am 16.03.2020, offenbart, dass in der Automatisierungstechnik evolutionäre Algorithmen eingesetzt werden um Optimierungsaufgaben zu lösen. Zu den evolutionären Algorithmen gehören genetische Programmierung und Differential-Evolutions-Algorithmen. Ein wesentlicher Vorteil von Differential-Evolutions-Algorithmen gegenüber genetischen Algorithmen besteht in deren geringeren Anforderungen an die notwendige Rechenleistung.

In der Automatisierungstechnik werden zunehmend komplexe Aufgaben durch automatische Steuereinheiten gelöst. Dies umfasst unter anderen den Betrieb automatisierter Anlagen, wie beispielsweise von Prozessanlagen, Fertigungsstraßen, Kraftwerken oder Leitsystemen. Es besteht die Bestrebung, auch solche Prozesse mit gesteigerter Komplexität in effizienter Weise sicher durchzuführen. Der Erfindung liegt die Aufgabe zugrunde, eine Möglichkeit zur Optimierung einer bestehenden Steuereinheit einer automatisierten Anlage bereitzustellen, die in zumindest einem der skizzierten Aspekte eine Verbesserung bietet.

Die Aufgabenstellung wird durch ein Optimierungsverfahren für eine Steuereinheit einer automatisierten Anlage gelöst. Die Steuereinheit ist dazu ausgebildet, Messsignale von Sensoren und Befehle zu empfangen und Befehle an Aktoren auszugeben. Die Sensoren und Aktoren sind in der automatisierten Anlage einsetzbar um den Betrieb der automatisieren Anlage im Zusammenwirken mit der Steuereinheit zu regeln und/oder zu steuern. Die automatisierte Anlage kann beispielsweise als Prozessanlage, insbesondere aus den Bereichen Chemie, Pharmazie, Glas, Wasser, Abwasser, Nahrungsmittel, Papier, Stahl, Zement, ausgebildet sein, oder als Fertigungsstraße, als Kraftwerk oder als Leitsystem, wie beispielsweise ein Verkehrsleitsystem, ausgebildet sein. Die Steuereinheit umfasst ein Steuerungsmittel, durch die die Funktionsweise der Steuereinheit vorgebbar ist. Das Steuerungsmittel ist dazu beispielsweise als Chip, FPGA, Computerprogrammprodukt, oder eine Kombination hieraus ausgebildet. Das Steuerungsmittel bestimmt den Funktionsablauf der automatisierten Anlage und kann dazu zumindest teilweise die Regelungsroutinen und/oder Steuerungsroutinen der automatisierten Anlage umfassen. Das Steuerungsmittel verkörpert im Wesentlichen die Intelligenz der Steuereinheit. Der im Steuerungsmittel bestimmte Funktionsablauf der automatisierten Anlage ist in funktionell verknüpfte Elementarfunktionen auflösbar. Zum Funktionsablauf gehört beispielsweise, welche Kühlwasserventile in einem Chemiewerk zu öffnen sind, um bei einem heiß gelaufenen Prozess wieder eine akzeptable Temperatur herzustellen. Die Elementarfunktionen stellen im Wesentlichen Befehle dar, die mit Variablen verknüpfbar sind und zu einem vorgegebenen Funktionsablauf führen. Elementarfunktionen sind beispielsweise mathematische Anweisungen, Regelkreis-Operatoren, Komparatoren, If-then-Anweisungen, Schleifen-Definitionen, Zähler, Variablen-Manipulatoren, Sprunganweisungen oder Boolean-Operatoren. Die Elementarfunktionsblöcke definieren in ihrer Wirkungsweise im Wesentlichen den Befehlssatz einer Pseudo-Programmiersprache des Steuerungsmittels. Alternativ oder ergänzend können die funktionell verknüpften Elementarfunktionsblöcke auch aus einer Programmierung einer Speicherprogrammierbaren Steuerung abgeleitet werden. Das Steuerungsmittel und seine Funktionsweise sind daher in einem Datenabbild darstellbar, das eine Mehrzahl an funktionell verknüpften Elementarfunktionen umfasst. Unter der funktionellen Verknüpfung ist eine Variablenübergabe von einer Elementarfunktion zur nächsten zu verstehen, durch die ein Zusammenwirken der Elementarfunktionsblöcke erwirkt wird.

Das erfindungsgemäße Optimierungsverfahren umfasst einen ersten Schritt, in dem ein Basis-Steuerungsmittel bereitgestellt wird. Das Basis-Steuerungsmittel stellt eine Ausgangsbasis für das Optimierungsverfahren dar und kann beispielsweise ein bereits fertiggestelltes Steuerungsmittel für die automatisierte Anlage sein. Das Basis-Steuerungsmittel wird hierbei in Form eines Datenabbilds mit den Elementarfunktionsblöcken des Basis-Steuerungsmittels bereitgestellt. Die Elementarfunktionsblöcke sind dabei funktionell miteinander verknüpft, was im Datenabbild ebenfalls darstellbar ist. In einem zweiten Schritt erfolgt ein zufallsunterstütztes Erzeugen einer Mehrzahl an Kandidaten-Steuerungsmitteln aus dem Datenabbild des Basis-Steuerungsmittels. In jedem der Kandidaten-Steuerungsmittel wird dazu zumindest ein Elementarfunktionsblock gegenüber seinem Pendant im Basis-Steuerungsmittel durch einen abweichenden Elementarfunktionsblock ersetzt. Die Auswahl, welcher Elementarfunktionsblock ersetzt wird und durch welchen abweichenden Elementarfunktionsblock, wird zufallsgestützt getroffen. Der zweite Schritt entspricht in seiner Wirkungsweise im Wesentlichen dem Erzeugen einer mutierten Population in einem genetischen Algorithmus. Die Kandidaten-Steuerungsmittel sind analog zum Basis-Steuerungsmittel auch als Datenabbilder ausgebildet, die jedoch kein Real-Vorbild haben.

Das Optimierungsverfahren umfasst einen dritten Schritt, in dem zumindest ein Kandidaten-Steuerungsmittel basierend auf zumindest einem einstellbaren Zielparameter ausgewählt wird. Das Auswählen erfolgt danach, welches zumindest eine Kandidaten-Steuerungsmittel in einer einstellbaren Weise vom Basis-Steuerungsmittel abweicht. Beispielsweise kann ein Kandidaten-Steuerungsmittel ausgewählt werden, das gegenüber dem Basis-Steuerungsmittel einen gesteigerten Ziel-Parameter aufweist. Unter einer Steigerung ist hierbei eine Änderung in einer angestrebten Richtung zu verstehen. Der einstellbare Zielparameter kann beispielsweise ein Materialdurchsatz, ein Energiebedarf, ein Verschleiß, ein produktqualitätsanzeigender Parameter, eine Latenzzeit des Steuerungsmittels, oder eine Kombination aus solchen Parametern sein. Das Ermitteln des Zielparameters für ein Kandidaten-Steuerungsmittel und das darauf basierende Auswählen des Kandidaten-Steuerungsmittels entspricht in einem genetischen Algorithmus im Wesentlichen einer Selektion aus der mutierten Population nach einer sogenannten Fitness-Funktion. In einem vierten Schritt des Optimierungsverfahrens erfolgt ein Ersetzen des Basis-Steuerungsmittels durch das Kandidaten-Steuerungsmittel, das im dritten Schritt ausgewählt wird. Wenn im dritten Schritt mehrere Kandidaten-Steuerungsmittel ausgewählt werden, kann eine endgültige Auswahl durch einen Benutzer getroffen werden. Das ausgewählte Kandidaten-Steuerungsmittel ist durch die Steuereinheit der automatisierten Anlage einsetzbar, so dass der Betrieb der automatisierten Anlage ab dann durch das Kandidaten-Steuerungsmittel vorgegeben ist.

Erfindungsgemäß wird im zweiten Schritt der zumindest eine abweichende Elementarfunktionsblock, durch den zumindest ein im Basis-Steuerungsmittel vorhandener Elementarfunktionsblock zu ersetzen ist, als semantisch verträglicher Elementarfunktionsblock ausgewählt. Der abweichende Elementarfunktionsblock ist im Kandidaten-Steuerungsmittel zu den mit ihm funktionell verknüpften Elementarfunktionsblöcken somit semantisch verträglich ausgebildet. Darunter ist zu verstehen, dass der abweichende Elementarfunktionsblock dazu geeignet ist, eine vorhandene funktionelle Verknüpfung mit anderen Elementarfunktionsblöcken fortzuführen, vorzugsweise in einer technisch sinnvollen Form. Dadurch wird gewährleistet, dass im zweiten Schritt eine Erzeugung von nicht funktionstüchtigen Kandidaten-Steuerungsmitteln reduziert wird. Eine semantische Verträglichkeit eines abweichenden Elementarfunktionsblocks ist in einfacher Weise während der Laufzeit des erfindungsgemäßen Optimierungsverfahrens ermittelbar. Die Erfindung beruht unter anderem auf der überraschenden Erkenntnis, dass durch eine solche Reduzierung an Freiheitsgrad im zweiten Schritt mehr funktionstüchtige, und damit potenziell zum Ersetzen des Basis-Steuerungsmittels geeignete Kandidaten-Steuerungsmittel erzeugbar sind. Bei einem wiederholten Durchführen des Optimierungsverfahrens ist bei einer reduzierten Anzahl an Iterationen ein geeignetes, optimiertes Kandidaten-Steuerungsmittel erzeugbar. Insbesondere ist gegenüber genetischen Algorithmen, die aus dem Stand der Technik bekannt sind, die Entstehung von gänzlich ungeeigneten mutierten Populationen vermeidbar, die über zahlreiche Iterationen hinweg aufwendig weitergerechnet werden müssen, so dass insgesamt das Optimierungsverfahren beschleunigt wird. Das erfindungsgemäße Optimierungsverfahren erlaubt es somit, bei reduziertem Rechenaufwand ein stärker optimiertes Kandidaten-Steuerungsmittel zu finden, durch das der Betrieb der automatisierten Anlage im Hinblick auf den einstellbaren Zielparameter verbesserbar ist.

In einer Ausführungsform des beanspruchten Optimierungsverfahrens ist das Basis-Steuerungsmittel als Controller der automatisierten Anlage ausgebildet. Ein solcher Controller, der beispielsweise als Chip oder FPGA ausgebildet sein kann, ist üblicherweise ein Resultat eines Konstruktionsprozesses, zu dem eine umfassende Dokumentation vorliegt, die beispielsweise eine funktionelle Gliederung umfasst. Durch das beanspruchte Optimierungsverfahren ist so ein Layout für einen optimierten Controller ermittelbar, durch den der vorhandene Controller, also das Basis-Steuerungsmittel, zu ersetzen ist. Im Falle eines zumindest teilweise hardwarebasierten Basis-Steuerungsmittels ist so ein besonders schnelles und leistungsfähiges Kandidaten-Steuerungsmittel ermittelbar, also ein gesteigerter Optimierungszugewinn erzielbar. Ferner liefern Controller, die als Basis-Steuerungsmittel dienen, Kandidaten-Steuerungsmittel, die für ein Resultat eines genetischen Algorithmus reduzierte Komplexität aufweisen. Die so ermittelten optimierten Controller, also die ausgewählten Kandidaten-Steuerungsmittel, sind für einen Entwickler in ihrer Funktionsweise nachvollziehbar. Durch eine solche Nachvollziehbarkeit ist zusätzlich die Sicherheit und Stabilität des optimierten Controllers gewährleistet. Je einfacher ein solcher optimierter Controller ist, umso leichter ist dieser über bekannte regelungstechnische Kriterien, wie beispielsweise dem Hurwitz-Kriterium oder dem Nyquist-Kriterium, überprüfbar. Darüber hinaus besteht unter Benutzern die Tendenz, mittel genetischer Algorithmen modifizierte Steuerungsmittel als unsicher einzustufen und deren Verwendung zu verwerfen. Das technische Potential genetischer Algorithmen bleibt so in realen Anwendungsfällen häufig ungenutzt. Die mit dem beanspruchten Optimierungsverfahren erreichbare erhöhte Nachvollziehbarkeit ist geeignet, diese Tendenz zu überwinden und das technische Potential genetischer Algorithmen für eine breite Spanne an Anwendungen zu erschließen.

Des Weiteren kann das Auswählen des Kandidaten-Steuerungsmittel im dritten Schritt basierend auf einer Erprobung der im zweiten Schritt erzeugten Kandidaten-Steuerungsmittel durchgeführt werden. Hierzu können die im zweiten Schritt erzeugten Kandidaten-Steuerungsmittel in einer Simulationseinheit der automatisierten Anlage eingesetzt werden. Eine solche Simulationseinheit kann unter anderem ein sogenannter Digitaler Zwilling der automatisierten Anlage ausgebildet sein. Derartige Digitale Zwillinge sind unter anderem in der Druckschrift US 2017/286572 A1 näher beschrieben. Der Offenbarungsgehalt von US 2017/286572 A1 wird durch Verweisung in die vorliegende Anmeldung mit einbezogen. Durch eine solche Simulationseinheit ist beispielsweise ermittelbar, inwieweit ein eingestellter Zielparameter des Optimierungsverfahrens erreichbar ist. Alternativ oder ergänzend kann die Erprobung auch durch ein Ermitteln einer inhärenten Eigenschaft des jeweiliges Kandidaten-Steuerungsmittels erfolgen. Eine solche inhärente Eigenschaft kann beispielsweise eine Batch-Laufzeit, also eine Durchlaufzeit durch den Funktionsablauf des Datenabbilds des Kandidaten-Steuerungsmittels sein, eine Latenzzeit, beispielsweise zwischen einem prozessrelevantem Ereignis und einer korrespondierenden Gegenmaßnahme, oder ein Prüfergebnis, das charakterisiert, ob das Kandidaten-Steuerungsmittel in eine Endlosschleife geraten kann. Im Sinne eines genetischen Algorithmus ist so eine Selektion über unterschiedliche Fitness-Funktionen möglich. Ob und inwieweit die Erprobung im dritten Schritt durch Simulation und/oder Ermitteln einer inhärenten Eigenschaft erfolgt, ist beispielsweise durch den Entwickler einstellbar. Im Sinne eines genetischen Algorithmus ist das beanspruchte Optimierungsverfahren somit lenkbar.

In einer weiteren Ausführungsform des beanspruchten Optimierungsverfahrens wird die semantische Verträglichkeit, die zwischen dem abweichenden Elementarfunktionsblock und den mit diesem funktionell verknüpften Elementarfunktionsblöcken im zweiten Schritt einzuhalten ist, durch Variablentypengleichheit oder Variablentypenumwandlung erreicht. Unter Variablentypengleichtheit ist zu verstehen, dass eine von einem Elementarfunktionsblock an den abweichenden Elementarfunktionsblock ausgegebene Variable typenidentisch zu einer seiner Eingangsvariablen ist. Beispielsweise ist eine Boolean-Variable, also Null oder Eins, aus einem Boolean-Operator nur semantisch verträglich als Eingangsvariable an einen weiteren Boolean-Operator übergebbar. Unter einer Variablenumwandlung ist zu verstehen, dass eine Ausgangsvariable eines Elementarfunktionsblocks nicht identisch zu einer Eingangsvariable des funktionell verknüpften abweichenden Elementarfunktionsblocks ist, jedoch mit technisch hinnehmbarem Informationsverlust oder frei von Informationsverlust umwandelbar ist. Beispielsweise ist eine ganzzahlige Variable, eine sogenannte Integer-Variable, in eine Gleitkomma-Variable umwandelbar und mathematisch mit einer anderen Gleitkomma-Variablen verknüpfbar. Die semantische Verträglichkeit ist dabei durch Umwandlung einer Ausgangsvariable oder einer Eingangsvariable erzielbar. Durch die vorhandenen Typen an Elementarfunktionsblöcken und ihren Variablen, also Eingangs- und Ausgangsvariablen, existiert eine relativ geringe Anzahl an semantisch verträglich umwandelbaren Variablentypen. Eine Einschränkung auf semantisch verträgliche Elementarfunktionsblöcke im zweiten Schritt ist dadurch in einfacher Weise umsetzbar. Der Rechenaufwand für das beanspruchte Optimierungsverfahren wird auch dadurch reduziert.

Darüber hinaus kann im beanspruchte Optimierungsverfahren der einstellbare Zielparameter als Batch-Laufzeit, als produktqualitätsanzeigender Parameter, beispielsweise als Stoffkonzentration, als ein Energiebedarf zur Durchführung eines auf der automatisierten Anlage ablaufenden Prozesses, als ein Verschleiß einer Komponente der automatisierten Anlage, als ein Materialdurchsatz, als ein Produktdurchsatz, oder als eine gewichtete Kombination hieraus ausgebildet sein. Das beanspruchte Optimierungsverfahren ist auf eine weite Spanne an Zielparametern anpassbar und somit für ein breites Einsatzspektrum, also eine Vielzahl unterschiedlicher Typen an automatisierten Anlagen, geeignet. Durch eine gewichtete Kombination von entsprechenden Zielparametern ist auch eine Optimierung im Hinblick auf gegensätzliche einzelne Zielparameter, wie beispielsweise Produktdurchsatz und Energiebedarf, möglich. Ferner sind weitere einzelne Zielparameter definierbar, die mit den anderen Zielparametern kombinierbar sind. Hierdurch weist das beanspruchte Optimierungsverfahren einen hohen Gard an Anpassbarkeit auf.

Ferner kann der zweite Schritt im beanspruchten Optimierungsverfahren wiederholt durchgeführt werden. Bei einem wiederholten Durchführen dient zumindest ein Datenabbild eines Kandidaten-Steuerungsmittel aus dem vorherigen Durchgang als Ausgangsbasis, das gegenüber dem Basis-Steuerungsmittel zumindest einen abweichenden Elementarfunktionsblock aufweist. Im Sinne eines genetischen Algorithmus ist das beanspruchte Optimierungsverfahren ohne Weiteres über eine Mehrzahl an Generationen durchführbar um so einen weiter gesteigerten Optimierungszugewinn zu erzielen. Der Optimierungsalgorithmus ist mit einer vergleichsweise geringen Anzahl an Rechenoperationen durchführbar. Über je mehr Generationen, also Durchläufe des zweiten Schritts, hinweg das beanspruchte Optimierungsverfahren durchgeführt wird, umso höher ist der erwartbare Optimierungszugewinn. Das Optimierungsverfahren bietet so insgesamt eine gesteigerte Leistungsfähigkeit.

Bei einem wiederholten Durchführen des zweiten Schritts kann das zumindest eine Datenabbild, das in den darauffolgenden Durchlauf übernommen wird, auf Basis eines einstellbaren Evolutionsparameters ausgewählt sein. Der einstellbare Evolutionsparameter ist analog dem Zielparameter gemäß dem dritten Schritt als einzelner Parameter oder als Kombination ausgebildet. Der Evolutionsparameter kann identisch dem Zielparameter aus dem dritten Schritt ausgebildet sein oder von diesem abweichen. Der Evolutionsparameter kann durch einen vollständigen Durchgang des beanspruchten Optimierungsverfahrens fest vorgegeben sein oder während der Laufzeit ausgewählt oder angepasst werden. Dies erlaubt es, bei einem Durchlauf des beanspruchten Optimierungsverfahrens, aus einer stagnierenden Entwicklung der Kandidaten-Steuerungsmittel herauszukommen. Der beanspruchte Optimierungsprozess ist dadurch robust gegen Stagnation und liefert mit erhöhter Wahrscheinlichkeit einen technisch nutzbaren Optimierungszugewinn.

In einer weiteren Ausführungsform des beanspruchten Optimierungsverfahrens ist der Evolutionsparameter derart ausgebildet, dass für eine wiederholte Durchführung des zweiten Schritts eine Mehrzahl an Datenabbildern mit zumindest einem abweichenden Elementarfunktionsblock auswählbar ist. Durch Auswählen mehrerer solcher Datenabbilder mit mindestens einem abweichenden Elementarfunktionsblock sind im Sinne eines genetischen Algorithmus mehrere Evolutionspfade anlegbar. Dazu kann der einstellbare Evolutionsparameter als Schwellenwert ausgebildet sein. Beispielsweise können so alle Datenabbilder von Kandidaten-Steuerungsmitteln mit mindestens einem abweichenden Elementarfunktionsblock als Ausgangsbasis für den darauffolgenden Durchgang des zweiten Schritts ausgewählt werden, bei denen der Produktdurchsatz über einem hinnehmbaren Minimum liegt. Das beanspruchte Optimierungsverfahren ist folglich in ihrem Variantenreichtum skalierbar. Dadurch, dass das beanspruchte Optimierungsverfahren durch die geforderte semantische Verträglichkeit gänzlich ungeeignete Kandidaten-Steuerungsmittel ausschließt, ist der Einsatz von gesteigerter Rechenleistung für das beanspruchte Optimierungsverfahren technisch effizient. Insbesondere wird das aufwendige Weiterrechnen von gänzlich ungeeigneten Varianten, also Kandidaten-Steuerungsmitteln mit semantisch unverträglich verknüpften Elementarfunktionsblöcken, vermieden. In Erwartung künftig weiter steigender Rechenleistungen bietet das beanspruchte Optimierungsverfahren damit die Grundlage für weiter gesteigerte Optimierungszugewinne.

Die zugrundeliegende Aufgabenstellung wird auch durch ein erfindungsgemäßes Steuerungsmittel gelöst, das in einer Steuereinheit einer automatisierten Anlage einsetzbar ist. Das Steuerungsmittel kann zumindest teilweise festverdrahtet ausgebildet sein, beispielsweise als Chip, Controller oder FPGA, wodurch eine erhöhte Rechengeschwindigkeit und Robustheit gegeben ist. Alternativ oder ergänzend kann das Steuerungsmittel zumindest als Computerprogrammprodukt, beispielsweise als Firmware oder als Software, ausgebildet sein. Ein Computerprogrammprodukt kann auf einer Vielzahl an Hardwareplattformen ausgeführt werden und relativ einfach modifiziert werden. Das erfindungsgemäße Steuerungsmittel kann auch als eine Kombination aus einer festverdrahteten Ausführungsform und einem Computerprogrammprodukt ausgebildet sein. Ferner kann das Steuerungsmittel monolithisch oder modular ausgebildet sein. Unter einer monolithischen Ausführungsform ist zu verstehen, dass sämtliche Funktionen des Steuerungsmittels auf einer einzigen Hardwareplattform ausführbar sind. Bei einem modular ausgebildeten Steuerungsmittel sind dessen Funktionen auf separaten Hardwareplattformen ausführbar und verwirklichen über eine kommunikative Verbindung die Gesamtfunktion des Steuerungsmittels. Beispielsweise kann ein Teil des Steuerungsmittels lokal in einem Leitrechner der automatisierten Anlage ausgeführt werden und ein anderer Teil in einer Computer-Cloud. Das erfindungsgemäße Steuerungsmittel umfasst eine Mehrzahl an funktionell verknüpften Elementarfunktionsblöcken, durch die die Funktionsweise des Steuerungsmittels definiert ist. Erfindungsgemäß ist das Steuerungsmittel mittels eines Optimierungsverfahren nach einer der oben dargestellten Ausführungsformen ausgebildet. Das erfindungsgemäße Steuerungsmittel ist in einfacher Weise in einer vorhandenen Steuereinheit der automatisierten Anlage im Zuge einer Nachrüstung implementierbar. Das erfindungsgemäße Steuerungsmittel ermöglicht es dadurch, die Effizienz einer automatisierten Anlage in einfacher Weise zu steigern.

Ebenso wird die oben beschriebene Aufgabe durch die erfindungsgemäße Steuereinheit gelöst. Die Steuereinheit ist zum Einsatz in einer automatisierten Anlage ausgebildet und dazu ausgebildet, ein einstellbares Steuerungsmittel anzuwenden. Dazu kann die Steuereinheit über eine Recheneinheit und eine Speichereinheit verfügen, durch die ein Computerprogrammprodukt ausführbar ist. Alternativ oder ergänzend kann die Steuereinheit auch über einen Chip-Sockel verfügen, in den ein Controller einsetzbar ist, der als Steuerungsmittel dient.

Erfindungsgemäß ist das Steuerungsmittel gemäß einer der oben skizzierten Ausführungsformen ausgebildet, also mittels des oben dargestellten Optimierungsverfahrens hergestellt. Die Steuereinheit kann dazu als monolithische Hardwareplattform ausgebildet sein, die mit der automatisierten Anlage verbunden ist. Alternativ kann die Steuereinheit auch als System mehrerer Hardwareplattformen ausgebildet sein, die kommunikativ miteinander verbunden sind und im Zusammenspiel den Betrieb der automatisierten Anlage vorgeben. Dies kann beispielsweise durch eine Computer-Cloud oder einen Leitrechner, der mit einer Computer-Cloud verbunden ist, erreicht werden.

Gleichermaßen wird die zugrundeliegende Aufgabenstellung durch eine erfindungsgemäße automatisierte Anlage gelöst, die über eine Mehrzahl an Sensoren und Aktoren verfügt, die mit einer Steuereinheit verbunden sind. Zumindest die Sensoren sind über die Steuereinheit auslesbar und zumindest die Aktoren sind durch die Steuereinheit betätigbar. Erfindungsgemäß ist die Steuereinheit nach einer der oben beschriebenen Ausführungsformen ausgebildet. Die technischen Vorzüge des optimierten Steuerungsmittels sind so in gesteigertem Maße nutzbar.

Die zugrundeliegende Aufgabenstellung wird ebenso durch ein erfindungsgemäßes Computerprogrammprodukt gelöst. Das Computerprogrammprodukt umfasst Schnittstellen, die jeweils oder separat zum Empfangen und Ausgaben von Datenabbildern von Steuerungsmitteln geeignet ausgebildet sind. Das Computerprogrammprodukt ist ferner dazu ausgebildet, ein empfangenes Datenabbild zu verarbeiten und dadurch zu optimieren. Das Optimieren des Datenabbilds erfolgt dabei erfindungsgemäß mittels eines Optimierungsverfahrens, das nach einer der oben skizzierten Ausführungsformen ausgebildet ist. Das Computerprogrammprodukt ist als Entwicklerwerkzeug einsetzbar und erlaubt es, das beanspruchte Optimierungsverfahren für eine Vielzahl an automatisierten Anlagen zu anzuwenden.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch den Aufbau einer beanspruchten automatisierten Anlage;
- FIG 2: den Aufbau eines Datenabbilds in einem ersten Stadium einer ersten Ausführungsform des beanspruchten Optimierungsverfahrens;
- FIG 3: in zweites Stadium der ersten Ausführungsform des beanspruchten Optimierungsverfahrens;
- FIG 4: einen Ausschnitt eines Datenabbilds einer Ausführungsform eines Kandidaten-Steuerungsmittels;
- FIG 5: einen Ausschnitt eines Datenabbilds einer Ausführungsform eines weiteren Kandidaten-Steuerungsmittels.

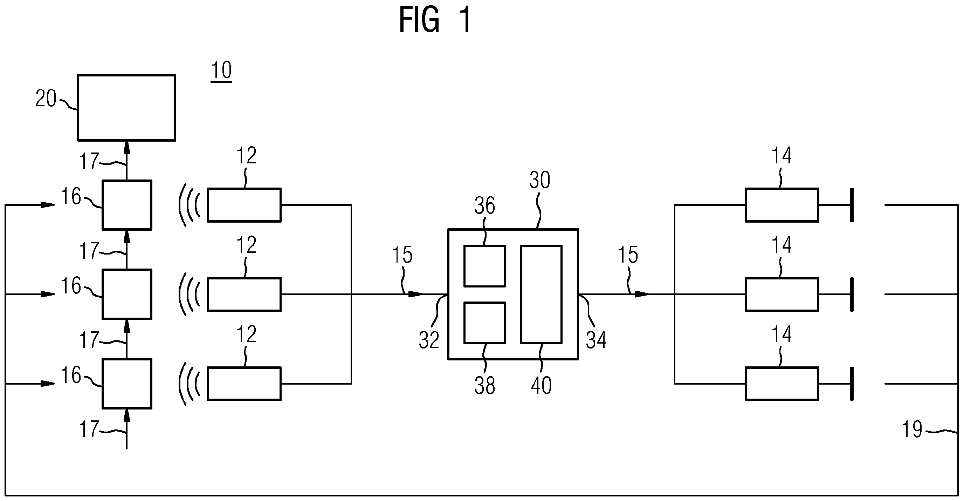

In FIG 1 ist schematisch der Aufbau einer automatisierten Anlage 10 dargestellt, die über eine Steuereinheit 30 verfügt und dazu dient, ein Produkt 20 herzustellen. Die Steuereinheit 30 ist mit einer Mehrzahl an Sensoren 12 verbunden, die jeweils zu einem Erfassen zumindest einer physikalischen Größe an einer Anlagenkomponente 16 ausgebildet sind. Die Anlagenkomponenten 16 wirken verkettet zusammen und fördern dabei ein Prozessgut 17. Durch die Einwirkung der Anlagenkomponenten 16 wird dazu Prozessgut 17 bearbeitet um das Produkt 20 herzustellen. Messergebnisse der Sensoren 12 werden als Signale 15 an die Steuereinheit 30 geleitet, die dazu über eine Eingangsschnittstelle 32 verfügt. Die Steuereinheit 30 ist ebenfalls mit einer Mehrzahl an Aktoren 14 verbunden, die auch zur automatisierten Anlage 10 gehören. Die Aktoren 14 sind über Signale 15 aus einer Ausgangsschnittstelle 34 der Steuereinheit 30 betätigbar. Die Betätigungen 19 der Aktoren 14 wirken auf Anlagenkomponenten 16 ein, mit denen das Prozessgut 17 zum Produkt 20 verarbeitet wird. Die Steuereinheit 30 verfügt über eine Recheneinheit 36 und eine Speichereinheit 38, die dazu ausgebildet sind, ein Steuerungsmittel 40 zu nutzen, das im Wesentlichen als Computerprogrammprodukt ausgebildet ist. Das Steuerungsmittel 40 ist durch ein Optimierungsverfahren 100 nach einem der folgenden Ausführungsformen hergestellt ist.

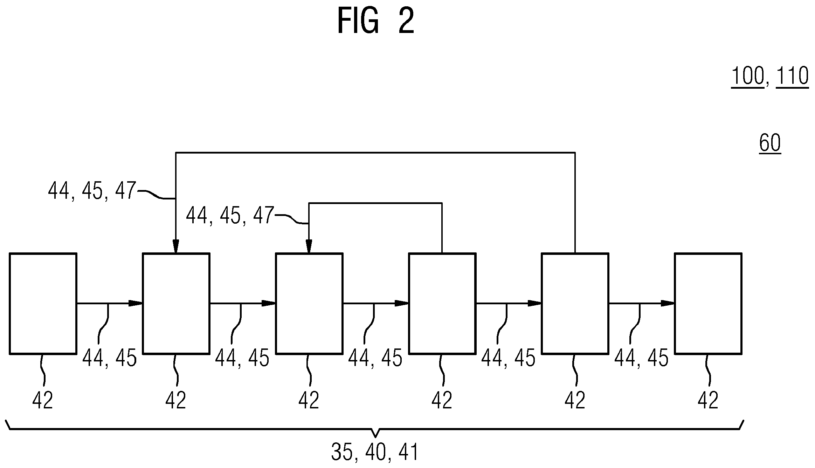

In FIG 2 ist der Aufbau eines Datenabbilds 41 gezeigt, in dem ein Steuerungsmittel 40 abgebildet ist. Das Steuerungsmittel 40 ist ein Basis-Steuerungsmittel 35, von dem eine erste Ausführungsform des beanspruchten Optimierungsverfahrens 100 in einem ersten Schritt 110 ausgeht. Das Datenabbild 41 des Steuerungsmittels 40, also des Basis-Steuerungsmittels 35, umfasst eine Mehrzahl an Elementarfunktionsblöcken 42, die miteinander verknüpft sind. Die Elementarfunktionsblöcke 42 können jeweils beispielsweise als mathematische Anweisungen, Regelkreis-Operatoren, Komparatoren, If-then-Anweisungen, Schleifen-Definitionen, Zähler, Variablen-Manipulatoren, Sprunganweisungen oder Boolean-Operatoren ausgebildet sein. Die Elementarfunktionsblöcke 42 sind dazu ausgebildet, an einen verknüpften anderen Elementarfunktionsblock 42 zumindest eine Variable 45 zu übergeben, die ein Resultat der vom Elementarfunktionsblock 42 durchgeführten Funktion ist. Ein einzelner Elementarfunktionsblock 42 kann auch mit einer Mehrzahl an Elementarfunktionsblöcken 42 verknüpft sein, die Variablen 45 als Eingaben übergeben, was in FIG 2 zwecks besserer Übersichtlichkeit nicht dargestellt ist. Das Steuerungsmittel 40 nach FIG 2 ist in einer automatisierten Anlage 10, wie in FIG 1 gezeigt, funktionstüchtig. Infolgedessen sind die Elementarfunktionsblöcke 42 derart ausgebildet, dass eine über eine Verknüpfung 45 übergebene Variable 45 vom empfangenden Elementarfunktionsblock 42 technisch sinnvoll weiterverarbeitbar ist. Infolgedessen besteht zwischen den Elementarfunktionsblöcken 42 semantische Verträglichkeit. Darüber hinaus sind einzelne Elementarfunktionsblöcke 42 über Verknüpfungen 44 miteinander verbunden, durch die jeweils eine Schleife 47 verwirklicht wird. Ein Steuerungsmittel 40 wie exemplarisch in FIG 2 gezeigt, wird in einem ersten Schritt 110 der ersten Ausführungsform des beanspruchten Optimierungsverfahrens 100 als Ausgangsbasis für die Optimierung zur Verfügung gestellt. Das in FIG 2 teilweise gezeigte Optimierungsverfahren 100 wird mittels eines nicht näher abgebildeten Computerprogrammprodukt 60 umgesetzt.

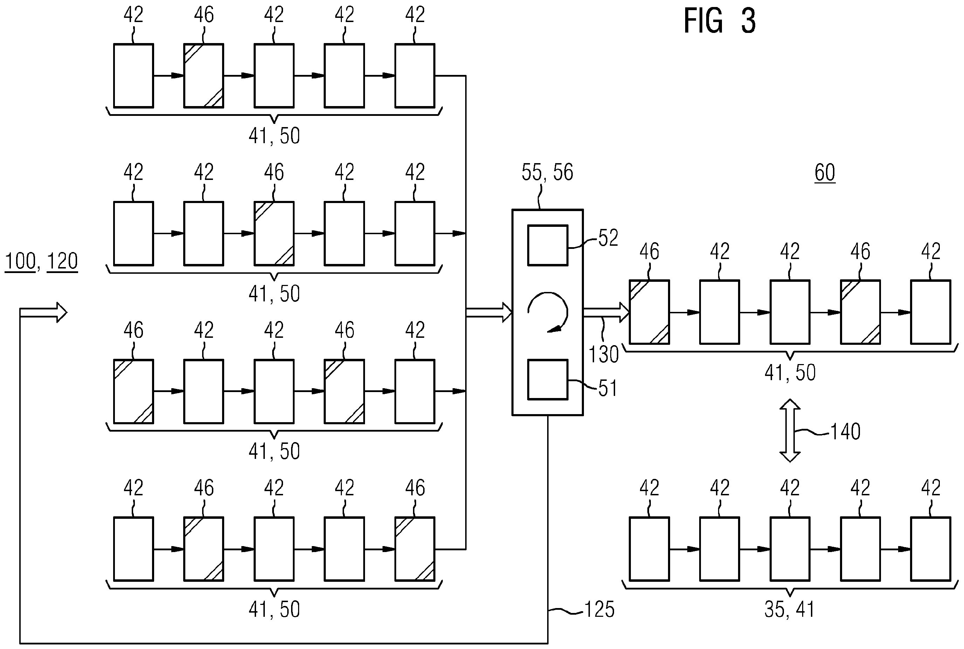

Ein zweites Stadium der ersten Ausführungsform des beanspruchten Optimierungsverfahrens 100, das sich an das erste Stadium in FIG 1 anschließt, ist in FIG 3 schematisch dargestellt. In einem zweiten Schritt 120 des Optimierungsverfahrens 100 wird ausgehend vom Datenabbild 41 nach FIG 2 eine Mehrzahl an Datenabbildern 41 erzeugt, die jeweils ein Kandidaten-Steuerungsmittel 50 bilden. Die Kandidaten-Steuerungsmittel 50 entsprechen im Wesentlichen dem Basis-Steuerungsmittel 35 und unterscheiden sich dadurch, dass diese jeweils zumindest einen abweichenden Elementarfunktionsblock 46 aufweisen. Beim Erzeugen der Kandidaten-Steuerungsmittel 50 wird die Auswahl des zu ersetzenden Elementarfunktionsblocks 42 zufallsunterstützt, also mittels eines Zufallsgenerators, getroffen. Die abweichenden Elementarfunktionsblöcke 46 sind im zweiten Schritt derart ausgebildet, dass diese mit den Elementarfunktionsblöcken 42, mit denen sie zusammenwirken, semantisch verträglich ausgebildet sind. Dadurch ist gewährleistet, dass die Kandidaten-Steuerungsmittel 50 prinzipiell lauffähig sind. Die erzeugten Kandidaten-Steuerungsmittel 50 werden mittels einer Auswerteeinheit 55 im Hinblick auf einen einstellbaren Evolutionsparameter 51 und/oder einen einstellbaren Zielparameter 52 ausgewertet. Zur Auswertung der Kandidaten-Steuerungsmittel 50 umfasst die Auswertungseinheit 55 eine Simulationseinheit 56, die als Digitaler Zwilling zumindest eines Teils der automatisierten Anlage 10 ausgebildet sein kann. Die Simulationseinheit 56 ist unter anderem durch einen Benutzer einstellbar. Die Auswertung durch die Auswertungseinheit 55 umfasst ein Ermitteln, inwieweit der einstellbare Evolutionsparameter 51 und/oder der einstellbare Zielparameter 52 erfüllt werden, also beispielsweise, welcher Materialdurchsatz in der automatisierten Anlage mit dem jeweiligen Kandidaten-Steuerungsmittel 50 erzielbar ist. Der Evolutionsparameter 51 und/oder der Zielparameter 52 sind durch einen Benutzer oder einen weiteren Algorithmus einstellbar. Basierend auf der Auswertung der Kandidaten-Steuerungsmittel 50 im Hinblick auf dem einstellbaren Evolutionsparameter 51 und/oder den einstellbaren Zielparameter 52 ist der zweite Schritt 120 über eine Rückführschleife 125 wiederholbar. Bei einem wiederholten Durchführen des zweiten Schritts 120 werden auf Basis eines bei einem vorherigen Durchlauf erzeugten Kandidaten-Steuerungsmittel 50 erneut mehrere neue Kandidaten-Steuerungsmittel 50 erzeugt. Der einstellbare Evolutionsparameter 51 und/oder der einstellbare Zielparameter 52 können beispielsweise ein Materialdurchsatz, ein Energiebedarf, ein Verschleiß, ein produktqualitätsanzeigender Parameter, eine Latenzzeit des Kandidaten-Steuerungsmittels 50, oder eine Kombination aus solchen Parametern sein. Insbesondere ist der zweite Schritt 120 wiederholbar, wenn keines der Kandidaten-Steuerungsmittel 50 den Zielparameter 52 in akzeptabler Weise erfüllt, beispielsweise keine Steigerung des Materialdurchsatzes bietet. Der einstellbar Evolutionsparameter 51 kann vom einstellbaren Zielparameter 52 abweichen um beispielsweise nach mehreren Durchgängen den zweiten Schritts 120 ein Stagnieren der Kandidaten-Steuerungsmittel 50 im Hinblick auf den einstellbaren Zielparameter 52 zu überwinden. Durch wiederholtes Durchführen des zweiten Schritts 120 wird so ein optimiertes Kandidaten-Steuerungsmittel 50 erzeugt, das im Hinblick auf den einstellbaren Zielparameter 52 eine Verbesserung bietet, beispielsweise einen erhöhten Materialdurchsatz der nicht näher gezeigten automatisierten Anlage 10. Ein optimiertes Kandidaten-Steuerungsmittel 50 wird in einem dritten Schritt 130 in Form eines Datenabbilds 41 ausgewählt und in einem vierten Schritt 140 eingesetzt, um das Basis-Steuerungsmittel 30, das in der nicht näher dargestellten Steuereinheit 40 der automatisierten Anlage 10 verwendet wird, zu ersetzen. Mittels des beanspruchten Optimierungsverfahrens 100 wird so ein bezogen auf den einstellbaren Zielparameter 51 ein Datenabbild 41 eines Kandidaten-Steuerungsmittels 50 erzeugt, das weiterhin eine mit dem Basis-Steuerungsmittel 30 vergleichbare Komplexität aufweist. Das im dritten Schritt 130 ausgewählte Kandidaten-Steuerungsmittel 50 ist dadurch für einen Benutzer, beispielsweise einen Entwickler, nachvollziehbar. Unter Benutzern besteht die Neigung, für sie nicht nachvollziehbare Steuerungsmittel 40 als unzuverlässig einzustufen und nicht in automatisierten Anlagen 10 einzusetzen. Das beanspruchte Optimierungsverfahren 100 erzeugt optimierte Kandidaten-Steuerungsmittel 50, die für Benutzer nachvollziehbar bleiben und ermöglichen damit in praxistauglicher Weise den Einsatz von Steuerungsmitteln 40, die unter Einsatz von genetischen Algorithmen erzeugt sind. Das in FIG 3 teilweise gezeigte Optimierungsverfahren 100 wird mittels eines nicht näher abgebildeten Computerprogrammprodukt 60 umgesetzt.

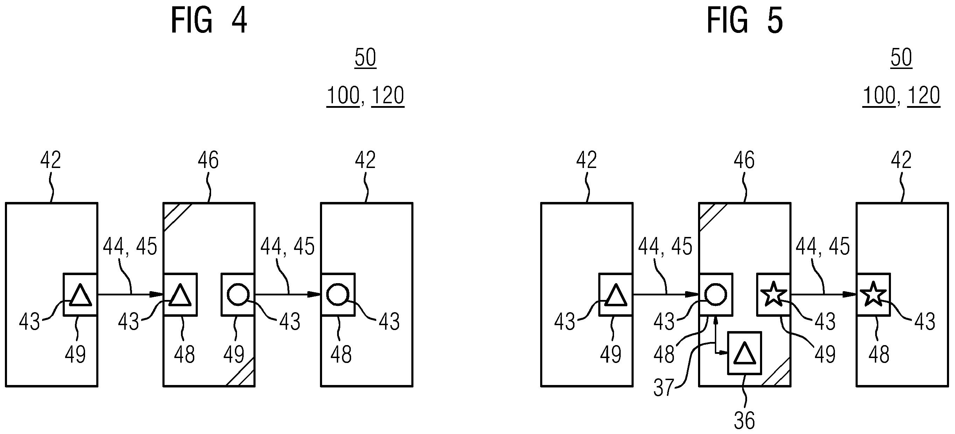

FIG 4 zeigt schematisch einen Ausschnitt eines Kandidaten-Steuerungsmittels 50, das im zweiten Schritt 120 einer Ausführungsform des beanspruchten Optimierungsverfahrens 100 erzeugt wird. Der Ausschnitt nach FIG 4 zeigt einen abweichenden Elementarfunktionsblock 46, der über Verknüpfungen 44 mit weiteren Elementarfunktionsblöcken 42 verbunden ist. Die Pfeilrichtung der Verknüpfungen 44 versinnbildlicht eine Ablaufrichtung des Kandidaten-Steuerungsmittels 50. Einer der Elementarfunktionsblöcke 42 weist eine Ausgangsschnittstelle 49 auf, über die eine Variable 45 als Ausgangsvariable an den abweichende Elementarfunktionsblock 46 übergebbar ist. Die von der Ausgangsschnittstelle 49 übergebene Variable 45 ist von einem bestimmten Variablentyp 43, der in FIG 3 als Dreiecksymbol dargestellt ist. Der abweichende Elementarfunktionsblock 46 weist eine Eingangsschnittstelle 48 auf, die zu einem Empfangen der Variablen 45 als Eingangsvariable ausgebildet ist. Der abweichende Elementarfunktionsblock 46 ist im zweiten Schritt 120 derart ausgewählt, dass die Eingangsschnittstelle 48 zu einem Empfangen einer Variable 45 von einem der Ausgangsschnittstelle 49 des verknüpften Elementarfunktionsblocks 42 entsprechenden Variablentyp 43 ausgebildet ist. Zwischen dem Elementarfunktionsblock 42 mit der Ausgangsschnittstelle 49 und dem abweichenden Elementarfunktionsblock 46 wird somit über Variablentypengleichheit semantische Verträglichkeit gewährleistet. In analoger Weise weist der abweichende Elementarfunktionsblock 46 eine Ausgangsschnittstelle 49 auf, die dazu ausgebildet ist, eine Variable 45 von einem Variablentyp 43 auszugeben, der als Kreissymbol dargestellt ist. Der Variablentyp 43 der Ausgangsschnittstelle 49 des abweichenden Elementarfunktionsblock 46 ist korrespondierend zum Variablentyp 43 einer Eingangsschnittstelle 48 eines Elementarfunktionsblocks 42 ausgebildet, der auch mit dem abweichenden Elementarfunktionsblock 46 verknüpft ist. Beim Einfügen des abweichenden Elementarfunktionsblocks 46 im zweiten Schritt 120 sind die Variablentypen 43 in den benachbarten Elementarfunktionsblöcken 42 vorgegeben, so dass beispielsweise durch eine Typenverträglichkeitstabelle prüfbar ist, ob ein zufallsgestützt vorgeschlagener abweichender Elementarfunktionsblock 46 auch zulässig für den zweiten Schritt 120 ist. Infolgedessen wird gewährleistet, dass im zweiten Schritt 120 des beanspruchten Optimierungsverfahrens 100 nur Kandidaten-Steuerungsmittel 50 erzeugt werden, die prinzipiell ausführbar, also funktionstüchtig, sind. Dadurch wird vermieden, dass das beanspruchte Optimierungsverfahren 100 in mehreren Durchgängen des zweiten Schritts 120 eine Vielzahl an ungeeigneten Kandidaten-Steuerungsmitteln 50 weiterrechnet, die ohnehin nicht als Ersatz für das Basis-Steuerungsmittel 30 geeignet sind.

Eine weitere Ausführungsform eines Kandidaten-Steuerungsmittels 50, das in einem zweiten Schritt 120 einer Ausführungsform des beanspruchten Optimierungsverfahrens 100 erzeugt ist, ist in FIG 5 in einem Ausschnitt gezeigt. Der Ausschnitt in FIG 5 zeigt einen abweichenden Elementarfunktionsblock 46, der mit Elementarfunktionsblöcken 42 über Verknüpfungen 44 verbunden ist. Durch die Verknüpfungen 44 werden zwischen den Elementarfunktionsblöcken 42 und dem abweichenden Elementarfunktionsblock 46 Variablen 45 übergeben. Ein Elementarfunktionsblock 42 verfügt über eine Ausgangsschnittstelle 49, die dazu ausgebildet ist, eine Variable 45 an eine Eingangsschnittstelle 48 des abweichenden Elementarfunktionsblocks 46 zu übergeben. Die von der Ausgangsschnittstelle 49 des Elementarfunktionsblocks 42 zu übergebende Variable 45 ist von einem Variablentyp 43, der durch ein Dreiecksymbol dargestellt ist. Die Eingangsschnittstelle 48 des abweichenden Elementarfunktionsblocks 46 ist dazu ausgebildet, einen abweichenden Variablentyp 43 zu empfangen, der als Kreissymbol abgebildet ist. Die Eingangsschnittstelle 48 des abweichenden Elementarfunktionsblocks 46 ist mit einer Umwandlungseinheit 36 gekoppelt, durch die zwischen den entsprechenden Variablentypen 43, also dem exemplarisch dargestellten Dreieck-Typ und dem Kreis-Typ, eine Variablentypenumwandlung 37 durchführbar ist. Der abweichende Elementarfunktionsblock 46 ist somit dazu geeignet, die originär semantisch unverträglich Variable 45 vom Elementarfunktionsblock 42 mit der Ausgangsschnittstelle 49 für die eigene Funktionsweise passend umzuwandeln und so semantische Verträglichkeit herzustellen. Dadurch wird semantische Verträglichkeit durch Variablentypenumwandlung 37 erzielt. Ferner ist der abweichende Elementarfunktionsblock 42 mit einer Ausgangsschnittstelle 49 versehen, die dazu ausgebildet ist eine Variable 45 von einem weiteren Variablentyp 43, der als Stern-Symbol dargestellt ist, an eine Eingangsschnittstelle 48 eines weiteren Elementarfunktionsblocks 42 auszugeben. Zwischen dem abweichenden Elementarfunktionsblock 46 und dem Elementarfunktionsblock 42 mit der Eingangsschnittstelle 48 wird semantische Verträglichkeit durch Variablentypengleichheit analog zu FIG 4 erzielt. Beim Durchführen des zweiten Schritts 120 ist beispielsweise über eine Umwandelbarkeitstabelle prüfbar, ob ein zufallsgestützt vorgeschlagener abweichender Elementarfunktionsblock 46, wenn keine Variablentypengleichheit vorliegt, semantische Verträglichkeit gewährleistet. Ergänzend zum Prinzip der Variablentypengleichheit wird so die im zweiten Schritt 120 mögliche Variationsbreite gesteigert, wodurch effizientere Kandidaten-Steuerungsmittel 50 erzeugbar sind.

## Patentansprüche

1. Optimierungsverfahren (100) für eine Steuereinheit (40) einer automatisierten Anlage (10), die ein Steuerungsmittel (40) aufweist, dessen Funktionsablauf in funktionell verknüpfte Elementarfunktionsblöcke (42) auflösbar ist, umfassend die Schritte:
a) Bereitstellen eines Basis-Steuerungsmittels (35) in Form eines Datenabbilds (41) mit dessen Elementarfunktionsblöcken (42);
b) Zufallsunterstütztes Erzeugen einer Mehrzahl an Kandidaten-Steuerungsmitteln (50) aus dem Datenabbild (41) des Basis-Steuerungsmittels (35) durch jeweiliges Ersetzen zumindest eines Elementarfunktionsblocks (42) durch zumindest einen abweichenden Elementarfunktionsblock (46);
c) Auswählen zumindest eines Kandidaten-Steuerungsmittels (50) basierend auf zumindest einem einstellbaren Zielparameter (52);
d) Ersetzen des Basis-Steuerungsmittels (35) durch das in Schritt c) ausgewählte Kandidaten-Steuerungsmittel (50),
**dadurch gekennzeichnet, dass** im Schritt b) der zumindest eine abweichende Elementarfunktionsblock (46) zu den mit ihm funktionell verknüpften Elementarfunktionsblöcken (42) zu einer Beschleunigung des Optimierungsverfahren (100) semantisch verträglich ausgebildet ist.

2. Optimierungsverfahren (100) nach Anspruch 1, **dadurch gekennzeichnet, dass** das Basis-Steuerungsmittel (35) als Controller der automatisierten Anlage (10) ausgebildet ist.

3. Optimierungsverfahren (100) nach Anspruch 1 oder 2, **dadurch gekennzeichnet, dass** das Auswählen im Schritt c) basierend auf einer Erprobung der Kandidaten-Steuerungsmittel (50) in einer Simulation (56) der automatisierten Anlage (10) erfolgt und/oder basierend auf einer Ermittlung zumindest einer inhärenten Eigenschaft der Kandidaten-Steuerungsmittel (50) .

4. Optimierungsverfahren (100) nach einem der Ansprüche 1 bis 3, **dadurch gekennzeichnet, dass** eine semantische Verträglichkeit Variablentypengleichheit umfasst oder durch Variablentypenumwandlung (37) erreicht wird.

5. Optimierungsverfahren (100) nach einem der Ansprüche 1 bis 4, **dadurch gekennzeichnet, dass** der einstellbare Zielparameter (52) eine Batch-Laufzeit, ein produktqualitätsanzeigender Parameter des mit der automatisierten Anlage (10) herzustellenden Produkts (20), ein Energiebedarf, oder eine gewichtete Kombination einer Auswahl dieser ist.

6. Optimierungsverfahren (100) nach einem der Ansprüche 1 bis 5, **dadurch gekennzeichnet, dass** Schritt b) ausgehend von zumindest einem Datenabbild (41) mit zumindest einem abweichenden Elementarfunktionsblock (46) wiederholt durchgeführt wird.

7. Optimierungsverfahren (100) nach Anspruch 6, **dadurch gekennzeichnet, dass** Schritt b) ausgehend von zumindest einem Datenabbild (41) jeweils wiederholt durchgeführt wird, das aufgrund zumindest eines einstellbaren Evolutionsparameters (51) ausgewählt ist.

8. Optimierungsverfahren (100) nach Anspruch 7, **dadurch gekennzeichnet, dass** der zumindest eine einstellbare Evolutionsparameter (51) vom zumindest einem einstellbaren Zielparameter (52) abweicht.

9. Optimierungsverfahren (100) nach einem der Ansprüche 7 oder 8, **dadurch gekennzeichnet, dass** der einstellbare Evolutionsparameter (51) dazu ausgebildet ist, eine Mehrzahl an Datenabbildern (41) mit zumindest einem abweichenden Elementarfunktionsblock (46) für ein wiederholtes Durchführen von Schritt b) auszuwählen.

10. Steuerungsmittel (40) für eine Steuereinheit (30) einer automatisierten Anlage (10), umfassend eine Mehrzahl an funktionell verknüpften Elementarfunktionsblöcken (42), **dadurch gekennzeichnet, dass** das Steuerungsmittel (40) mittels eines Optimierungsverfahrens (100) nach einem der Ansprüche 1 bis 9 hergestellt ist.

11. Steuereinheit (30) einer automatisierten Anlage (10), umfassend zumindest ein Steuerungsmittel (40), **dadurch gekennzeichnet, dass** das Steuerungsmittel (40) nach Anspruch 10 ausgebildet ist.

12. Automatisierte Anlage (10), umfassend eine Mehrzahl an Sensoren (12) und Aktoren (14), die über eine Steuereinheit (30) auslesbar und/oder betätigbar sind, **dadurch gekennzeichnet, dass** die Steuereinheit (30) nach Anspruch 11 ausgebildet ist.

13. Computerprogrammprodukt (60), umfassend Schnittstellen zum Empfangen und Ausgeben von Datenabbildern (41) von Steuerungsmitteln (40), das zu einem Optimieren zumindest eines empfangenen Steuerungsmittels (40) zu einem Durchführen eines Optimierungsverfahrens (100) ausgebildet ist, **dadurch gekennzeichnet, dass** das Optimierungsverfahren (100) nach einem der Ansprüche 1 bis 9 ausgebildet ist.
